# EUROPEAN PATENT APPLICATION

(11) **EP 4 733 095 A1**
(43) Date of publication of application: **29.04.2026**
(21) Application number: 24830370.3
(22) Date of filing: 29.05.2024
(51) Int. Cl.: B60H 1/00

(54) **AIR-CONDITIONER CONTROLLER, CONTROL METHOD, AND ELECTRIC-VEHICLE AIR CONDITIONING SYSTEM**

(30) Priority: 25.06.2023 CN 202310748885
(71) Applicant: Zinsight Future Technology (Nanjing) Co., Ltd, Nanjing, Jiangsu 211106 (CN); Zinsight Technology (Shanghai) Co. Ltd, Shanghai 201114 (CN)
(72) Inventor: WEI, Xuejun, Shanghai 201114 (CN); XU, He, Shanghai 201114 (CN); ZHANG, Jiahao, Shanghai 201114 (CN); XU, Huihui, Shanghai 201114 (CN); WANG, Huijiao, Shanghai 201114 (CN)
(74) Representative: HGF
(86) International application number: PCT/CN2024/096166
(87) International publication number: WO 2025/001723

(57) **Abstract**

The present disclosure relates to an air conditioning controller, a control method, and an electric vehicle air conditioning system. The controller includes a high-voltage side control unit including a high-voltage side controller, a low-voltage side control unit including a low-voltage side controller that receives an external input command and transmits the same to the high-voltage side controller, a digital isolation unit arranged between the high-voltage side control unit and the low-voltage side control unit, and a circuit board, on which the high-voltage side control unit, the low-voltage side control unit, and the digital isolation unit are arranged.

## Description

### RELATED APPLICATIONS

The present disclosure claims the priority of the Chinese patent application No. 202310748885.2, filed on June 25, 2023 and titled "Air Conditioning All-in-One Controller, Control Method, and Electric Vehicle Air Conditioning System", the entire text of which is incorporated herein by reference.

### TECHNICAL FIELD

The present disclosure relates to the field of automotive air conditioning, and specifically to air conditioning controllers, control methods, and electric vehicle air conditioning systems.

### BACKGROUND

Whether it is traditional fuel vehicles, hybrid vehicles, or pure electric vehicles, the principle of vehicle air conditioning refrigeration is similar, but the power source is different. The power source of traditional fuel vehicle air conditioning is the engine, while hybrid vehicles and pure electric vehicles generally drive the electric air conditioning compressor through the traction battery. However, in terms of heating principles, there is a significant difference between traditional fuel vehicles and electric vehicles. The heat source of traditional fuel vehicles mainly comes from the waste heat generated during the operation of the engine, and the heat is sent into the vehicle through a blower to achieve the heating purpose. For pure electric vehicles, since there is no engine, auxiliary heating methods can only be used, such as heating through PTC and/or other similar heating methods.

The entire thermal management system of a vehicle needs to include multiple functional circuits or controllers and structural components. A complete thermal management system typically consists of the following electrical and structural components: a top-level thermal management controller, a PTC controller, an air conditioning compressor controller, a water heater water channel, and a water heater resistance unit, etc. In related technologies, the above sub-components are relatively independent, and communication and control between each sub-component are generally carried out through external wire harness connections.

### SUMMARY

According to various embodiments of the present disclosure, an air conditioning controller, a control method, and an electric vehicle air conditioning system are provided.

In an aspect of the present disclosure, an air conditioning controller is provided, which includes:
a high-voltage side control unit, including a high-voltage side controller configured to control operation of a water heater and a compressor to achieve temperature regulation;
a low-voltage side control unit, including a low-voltage side controller configured to receive an external input command and transmit the external input command to the high-voltage side controller, wherein the external input command is transmitted via a communication circuit through a digital isolation unit, and the external input command is configured to control the water heater and the compressor;
a digital isolation unit, arranged between the high-voltage side control unit and the low-voltage side control unit to realize isolated communication between the high-voltage side control unit and the low-voltage side control unit; and
a circuit board, on which the high-voltage side control unit, the low-voltage side control unit and the digital isolation unit are arranged.

Optionally, the high-voltage side control unit further includes a high-voltage EMC filter circuit connected to a traction battery and configured to stabilize power supply of the traction battery.

Optionally, the high-voltage side control unit further includes a phase current sampling circuit configured to monitor a three-phase current of the compressor.

Optionally, the high-voltage side control unit further includes a bus voltage sampling circuit configured to detect a voltage of the traction battery.

Optionally, the high-voltage side control unit further includes a bus current sampling circuit configured to sample an input current of the controller.

Optionally, the high-voltage side control unit further includes a compressor U, V, W three-phase full-bridge circuit/module configured to control start/stop, a rotation speed, and a working power of the compressor.

Optionally, the high-voltage side control unit further includes:
a water heater; and
a water heater power circuit configured to control start/stop and a power of the water heater.

Optionally, the high-voltage side control unit further includes a water heater resistance current sampling circuit configured to collect an operating current of the water heater.

Optionally, the high-voltage side control unit further includes:
a power device case temperature sampling module configured to collect case temperatures of power devices of the compressor controller and the water heater controller; and
a board temperature sampling module configured to collect a temperature of the circuit board.

Optionally, the low-voltage side control unit or the high-voltage side controller unit includes a water temperature sampling module electrically connected to the low-voltage side control unit or the high-voltage side control unit and configured to detect a water temperature of the water heater.

Optionally, the low-voltage side control unit further includes a low-voltage EMC filter circuit connected to a low-voltage power supply battery, the low-voltage power supply battery supplies power to the low-voltage side control unit, and the low-voltage EMC filter circuit is configured to stabilize power supplied to the low-voltage side control unit.

Optionally, the low-voltage side control unit further includes a solenoid valve control module configured to control start/stop or a power of a fan.

Optionally, the solenoid valve control module is further configured to control start/stop or a power of a water pump.

In another aspect of the present disclosure, an air conditioning thermal management control method employing the controller according to the first aspect is provided, which includes following steps:
receiving, by the low-voltage side controller, an external input command from a control panel, the external input commands including one or more of power on/off information, temperature setting information, or an air volume;
transmitting, by the low-voltage side controller, the external input command to the high-voltage side controller via a communication circuit through a digital isolation unit, wherein the digital isolation unit is arranged between the high-voltage side control unit and the low-voltage side control unit to realize isolated communication between the high-voltage side control unit and the low-voltage side control unit; and
controlling, by the high-voltage side controller, operation of a water heater and a compressor to achieve temperature regulation.

Optionally, the high-voltage side or the low-voltage side is further configured to obtain a water temperature of the water heater.

Optionally, the high-voltage side or the low-voltage side is further configured to obtain an operating current of the water heater.

Optionally, the high-voltage side or the low-voltage side is further configured to obtain case temperatures of power devices of the compressor controller and the water heating controller, and a temperature of the circuit board.

In yet another aspect of the present disclosure, an electric vehicle air conditioning system is provided, which includes the controller according to the first aspect, or performs the control method according to the second aspect.

The details of one or more embodiments of the present disclosure are set forth in the accompanying drawings and the following description. Other features, objects, and advantages of the present disclosure will become apparent from the specification, the drawings, and the claims.

### BRIEF DESCRIPTION OF THE DRAWINGS

To more clearly illustrate the technical solutions in the embodiments of the present application or in the traditional technologies, the following will briefly introduce the drawings needed in the description of the embodiments or the traditional technologies. Obviously, the drawings in the following description are only the embodiments of the present application. For those of ordinary skill in the art, other drawings can also be obtained according to the disclosed drawings without making creative efforts.
FIG. 1 is a structural block diagram of an air conditioning controller according to one or more embodiments.
FIG. 2 is a schematic structural diagram of an air conditioning controller according to one or more embodiments.
FIG. 3 is a schematic power topology diagram of an air conditioning controller according to one or more embodiments.
FIG. 4 is a schematic flow chart of an air conditioning thermal management control method according to one or more embodiments.
FIG. 5 is a flow chart of implementing temperature regulation according to one or more embodiments.

### REFERENCE SIGNS:

10. High-voltage side control unit; 101. High-voltage side controller; 102. High-voltage EMC filter circuit; 103. Phase current sampling circuit; 104. Bus voltage sampling circuit; 105. Water heater resistance current sampling circuit; 106. Bus current sampling circuit; 107. Power semiconductor device driven by water heater; 20. Low-voltage side control unit; 201. Low-voltage side controller; 202. Water temperature sampling module; 203. Low-voltage EMC filter circuit; 204. Solenoid valve control module; 30. Digital isolation unit; 40. Circuit board; 50. Compressor U, V, W three-phase full-bridge circuit/module; 60. Water heater.

### DETAILED EMBODIMENTS

The technical solutions in the embodiments of the present application will be clearly and completely described below in conjunction with the accompanying drawings in the embodiments of the present application. Obviously, the described embodiments are only part of the embodiments of the present application, not all of them. Based on the embodiments in this application, all other embodiments obtained by those of ordinary skill in the art without making creative efforts shall fall within the protection scope of this application.

Various exemplary embodiments, features, and aspects of the present disclosure will be described in detail below with reference to the accompanying drawings. The same reference numerals in the drawings indicate elements with the same or similar functions. Although various aspects of the embodiments are shown in the drawings, the drawings are not necessarily drawn to scale unless otherwise specified.

The word "exemplary" as used herein means "serving as an example, embodiment, or illustration". Any embodiment described herein as "exemplary" is not necessarily to be construed as being superior or better than other embodiments.

The term "and/or" in this article is only a kind of associative relationship describing associated objects, indicating that there can be three kinds of relationships. For example, A and/or B can mean: A exists alone, A and B exist at the same time, and B exists alone. In addition, the term "at least one" in this article refers to any one of multiple types or any combination of at least two of multiple types. For example, including at least one of A, B, and C can mean including any one or more elements selected from the set composed of A, B, and C.

In addition, in order to better illustrate the present disclosure, numerous specific details are given in the following specific implementation modes. Those skilled in the art should understand that the present disclosure can also be implemented without certain specific details. In some instances, methods, means, components, and circuits well-known to those skilled in the art are not described in detail so as to highlight the gist of the present disclosure.

It can be understood that the above-mentioned various method embodiments mentioned in the present disclosure can be combined with each other to form combined embodiments without violating the principle and logic. Due to space limitations, the present disclosure will not repeat them.

In related solutions, each sub-component of the air-conditioning controller is often developed and designed by different suppliers or technicians, resulting in inconsistent structures and lack of aesthetics; the entire thermal management system is bulky, which reduces the space for the vehicle occupants and lowers their comfort; each sub-component forms its own system, resulting in a heavy total weight, which reduces the cruising range of electric vehicles; each sub-component is connected through external wire harnesses, and the connecting wire harnesses are prone to damage or poor contact at the connector ports, which reduces product reliability and poses a threat to the stable operation of the entire vehicle and the safety of the occupants; the shells and filter components of each sub-component cannot be shared, causing resource waste, and the external connectors and wire harnesses are expensive, leading to an increase in manufacturing costs.

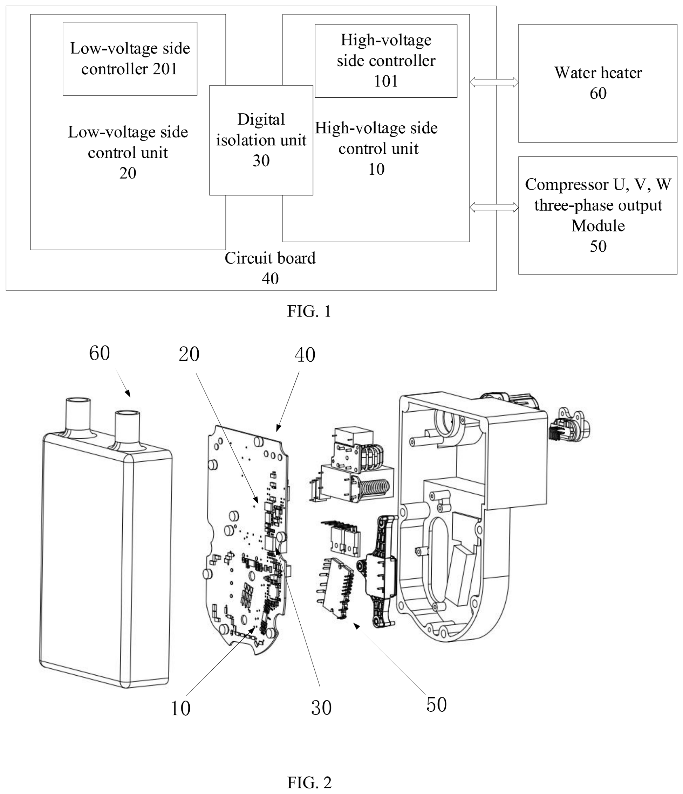

An embodiment of the present disclosure provides an air conditioning controller. As shown in FIGS. 1, 2, and 3, the air conditioning controller includes:
a high-voltage side control unit 10, including a high-voltage side controller 101 configured to control operation of a water heater 60 and a compressor (not shown in the figures) to achieve temperature regulation;
a low-voltage side control unit 20, including a low-voltage side controller 201 configured to receive an external input command and transmit the external input command to the high-voltage side controller 101, where the external input command is transmitted via a communication circuit (not shown in the figures) through a digital isolation unit 30, and the external input command is configured to control the water heater 60 and the compressor;
a digital isolation unit 30, arranged between the high-voltage side control unit 10 and the low-voltage side control unit 20 to realize isolated communication between the high-voltage side control unit 10 and the low-voltage side control unit 20; and
a circuit board 40, on which the high-voltage side control unit 10, the low-voltage side control unit 20, and the digital isolation unit 30 are arranged.

The air conditioning controller can be configured to control the heating mode powered by batteries in electric vehicles or hybrid vehicles, and can also be used in control equipment in other fields that need to use electric heating to obtain heat.

The high-voltage side controller 101 or the low-voltage side controller 201 may be a processor or microcontroller capable of realizing control and data processing, such as an 8-bit or 32-bit MCU.

The water heater 60 may be a resistive water heater, such as a PTC resistor or a membrane resistor, configured to increase the temperature in spaces such as vehicles.

The external input command may be a command input through a control panel (not shown in the figures) to the low-voltage side controller 201, or a received wireless signal command, such as a power on/off command, a heating or cooling command, a temperature adjustment command, or a cooling/heating mode, etc.

The digital isolation unit 30 may be a digital isolation chip, such as an optocoupler, etc.

The communication circuit can adopt commonly used vehicle communication methods, such as CAN communication, LIN communication, or a combination of both.

The circuit board 40 may be a PCBA board. A single PCBA board can realize the functions of multiple controllers.

In some embodiments, the connection between the air conditioning controller and external components, such as the connection between the high-voltage side control unit 10 and the compressor, can be achieved through a high-voltage DC connector. A port of the high-voltage DC connector is connected to the high-voltage DC wiring harness and is connected to a traction battery PDU. The low-voltage side control unit 20 can use a low-voltage signal connector for signal transmission, thereby saving the costs of multiple components such as connectors, wiring harnesses, housings, filter components, and MCU chips. A port of the low-voltage signal connector is connected to the low-voltage wiring harness, and is mainly configured to receive/transmit signals such as low-voltage battery power supply signals, air conditioning panel communication signals, fan control signals, water pump control signals, and solenoid valve signals.

In some embodiments, the external physical interfaces of the air conditioning controller also include a water channel interface for the water heater 60. The water channel interface is configured to supply water to the water heater 60 and is connected to the vehicle's circulating water circuit, etc.

In some embodiments, the air conditioning controller can be connected to the three-phase terminals of the air conditioning compressor and the power terminals of the water heater 60 through elastic plug-in connection, crimping, or screw fastening, respectively.

The high-voltage side control unit 10 and the low-voltage side control unit 20 realize the control of high-voltage equipment and low-voltage equipment respectively, and the high-voltage side control unit 10 and the low-voltage side control unit 20 realize two-way communication through isolated communication. This can enhance the reliability of the electric vehicle air conditioning thermal management system and also reduce the manufacturing and research and development costs of the electric vehicle air conditioning thermal management system.

In some embodiments, the high-voltage side control unit 10 further includes a high-voltage EMC filter circuit 102, which is connected to a traction battery (not shown in the figures). The high-voltage EMC filter circuit 102 is configured to stabilize the power supply of the traction battery. The traction battery may be a lithium battery pack or other batteries capable of providing motive power.

In some embodiments, the high-voltage side control unit 10 further includes a phase current sampling circuit 103, which is configured to monitor the three-phase current of the compressor.

The phase current sampling circuit 103 may include a current monitor to conduct real-time monitoring of the three-phase current flowing through the compressor.

In some embodiments, the high-voltage side control unit 10 further includes a bus voltage sampling circuit 104, which is configured to detect the voltage of the traction battery.

In some embodiments, the high-voltage side control unit 10 further includes a bus current sampling circuit 106, which is configured to sample the input current of the air conditioning controller.

In some embodiments, the high-voltage side control unit 10 further includes a compressor U, V, W three-phase full-bridge circuit/module 50, which is configured to control the start/stop, a rotation speed, an operating power of the compressor, etc.

In some embodiments, the high-voltage side control unit 10 further includes a water heater 60 and a water heater power circuit 104. The water heater power circuit 104 is configured to control start/stop and a power of the water heater.

In some embodiments, the high-voltage side control unit 10 further includes a water heater resistance current sampling circuit 105, which is configured to collect the operating current of the water heater 60.

In some embodiments, the high-voltage side control unit 10 further includes a power device case temperature sampling module 106 and a board temperature sampling module 107. The power device case temperature sampling module 106 is configured to collect the temperatures of the casings of the power devices of the compressor controller and the water heater controller 60, and the board temperature sampling module 107 is configured to collect the temperature of the circuit board 40.

In some embodiments, the low-voltage side control unit 20 includes a water temperature sampling module 202. The water temperature sampling module 202 is electrically connected to the low-voltage side controller 201, and the water temperature sampling module 202 is configured to detect the water temperature of the water heater.

In some embodiments, the low-voltage side control unit 20 further includes a low-voltage EMC filter circuit 203. The low-voltage EMC filter circuit 203 is connected to a low-voltage power supply battery (not shown in the figures). The low-voltage power supply battery supplies power to the low-voltage side control unit 20, and the low-voltage EMC filter circuit 203 is configured to stabilize the power supplied to the low-voltage side control unit 20.

In some embodiments, the low-voltage side control unit 20 further includes a solenoid valve control module 204, which is configured to control start/stop or a power of a fan.

In some embodiments, the solenoid valve control module 204 is further configured to control start/stop or a power of a water pump.

In some embodiments, the solenoid valve control module 204 can control the start/stop or the power of the fan or water pump through a power switching device. The power switching device may be a MOSFET, IGBT, diode, or triode.

In other embodiments, the solenoid valve control module 204 can also control the start/stop or the power of the fan or water pump through a power module.

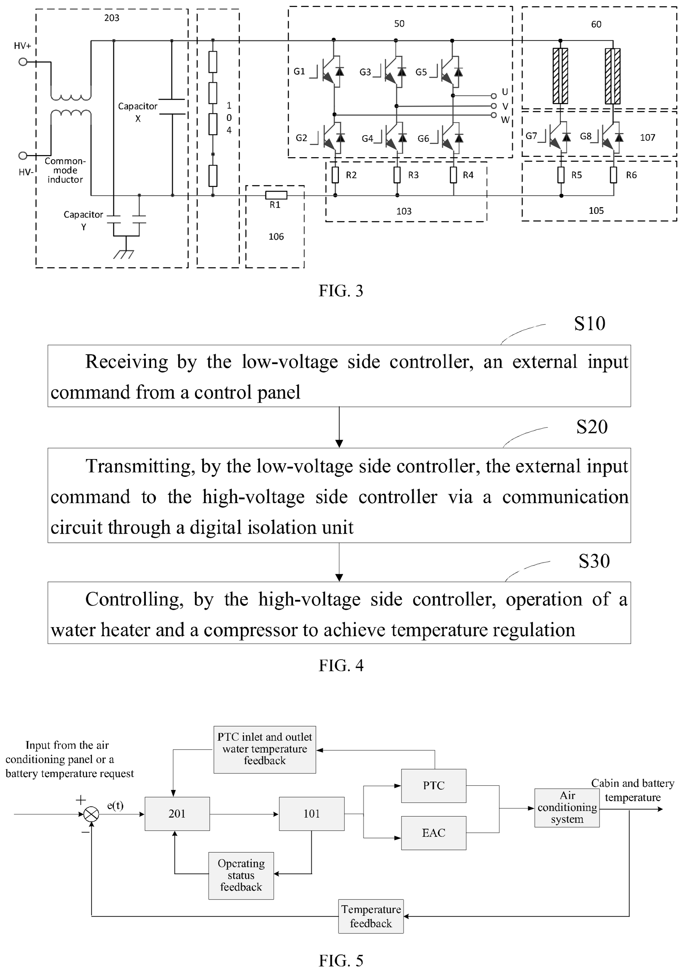

FIG. 3 shows a schematic power topology diagram of the air conditioning controller, which includes a high-voltage EMC filter circuit 203, a compressor U, V, W three-phase full-bridge circuit/module 50, a phase current sampling circuit 103, a bus voltage sampling circuit 104, a bus current sampling circuit 106, a water heater 60, a power semiconductor device 107 of a water heater controller (not shown in the figure), and a water heater resistance current sampling circuit 105. G1-G6 are power switching devices that control the normal operation of the compressor, G7-G8 are power switching devices that control the heating of PTC resistors or film resistors, M is the compressor, and R1-R6 are current sampling resistors. The sampled current signals are used for loop control. The power devices are not limited to IGBTs, MOSFETs, etc.

All or part of the various modules in the above air conditioning controller can be implemented through software, hardware, or a combination thereof. The above modules can be embedded in hardware form in or independent of the processor in the server, or stored in the memory in the server in software form, so that the processor can call and execute the operations corresponding to the above modules.

As used in this application, the terms "component", "module", and "system" are intended to refer to computer-related entities, which can be hardware, a combination of hardware and software, software, or software in execution. For example, a component may be, but is not limited to, a process running on a processor, a processor, an object, executable code, an executing thread, a program, and/or a computer. By way of illustration, both an application running on a server and the server itself can be components. One or more components can reside within a process and/or an executing thread, and a component can be located within one computer and/or distributed between two or more computers.

An embodiment of the present disclosure provides an air conditioning thermal management control method, which employs the air conditioning controller in the above embodiments. FIG. 4 is a schematic flow chart of an air conditioning thermal management control method according to an embodiment of the present disclosure. It should be understood that although the various steps in the flow chart shown in FIG. 4 are displayed in sequence as indicated by the arrows, these steps are not necessarily executed in the sequence indicated by the arrows. Unless explicitly stated herein, the execution of these steps is not subject to strict order restrictions and can be executed in other orders. Moreover, at least some of the steps in FIG. 4 may include multiple sub-steps or multiple stages. These sub-steps or stages are not necessarily completed at the same time, but can be executed at different times, and their execution order is not necessarily sequential. Instead, they can be executed alternately or in turn with at least some of the other steps or the sub-steps or stages of other steps.

As shown in FIG. 4, the air conditioning thermal management control method of the embodiment includes the following steps:

In a step S10, a low-voltage side controller is used to obtain an external input command input through a control panel.

The external input command includes one or more of power on/off information, temperature setting information, or an air volume.

In a step S20, the low-voltage side controller transmits the external input command to the high-voltage side controller, and the external input command is transmitted via a communication circuit through a digital isolation unit.

The digital isolation unit is arranged between the high-voltage side control unit and the low-voltage side control unit to realize isolated communication between the high-voltage side control unit and the low-voltage side control unit.

In a step S30, the high-voltage side controller controls operation of the water heater and the compressor to achieve temperature regulation.

In some embodiments, the low-voltage side controller 201 is further configured to obtain the water temperature of the water heater.

In some embodiments, the low-voltage side controller 201 is further configured to obtain temperatures of a water inlet and a water outlet of the water heater.

In some embodiments, the low-voltage side controller 201 is further configured to obtain an operating current of the water heater.

In some embodiments, the low-voltage side controller 201 is further configured to obtain case temperatures of power devices of the compressor controller and the water heating controller, as well as a temperature of a circuit board.

In some embodiments, the high-voltage side controller 101 is further configured to obtain the water temperature of the water heater.

In some embodiments, the high-voltage side controller 101 is further configured to obtain temperatures of the water inlet and outlet of the water heater.

In some embodiments, the high-voltage side controller 101 is further configured to obtain an operating current of the water heater.

In some embodiments, the high-voltage side controller 101 is further configured to obtain case temperatures of the power devices of the compressor controller and the water heating controller, as well as the temperature of the circuit board.

According to an exemplary embodiment, as shown in FIG. 5, which shows a schematic flow chart of implementing temperature regulation using the method in this embodiment, the driver or passenger inputs an external input command through the air conditioning panel, and the low-voltage side controller 201 receives the external input command from the air conditioning panel (including on/off information, temperature setting information, or an air outlet air volume information, etc.) through CAN/LIN communication. The low-voltage side controller 201 sends the external input command to the high-voltage side controller 101 (Compressor & Heater main control MCU) through CAN/LIN communication. The low-voltage side controller 201 also controls the operation of executive components such as fans, water pumps, and solenoid valves. The high-voltage side controller 101 sends PWM waves to control the turning on and off of EAC/Heater power devices, controls the operation of the air conditioning compressor/Heater, adjusts the temperature of the air conditioning system in the cabin, and realizes temperature regulation. The Heater is a PTC-based water heater 60.

According to an exemplary embodiment, an electric vehicle air conditioning system is provided, which includes the air conditioning controller in the above embodiments, or performs the above air conditioning thermal management control methods.

The present disclosure can solve the problems caused by the relative independence of various sub-components in the electric vehicle air conditioning thermal management system. The high-voltage side control unit 10 and the low-voltage side control unit 20 are arranged on the same circuit board 40 to form an all-in-one air conditioning controller, which has the following beneficial effects: 1) The structure of the air conditioning controller is perfectly matched and the appearance is neat; 2) The air conditioning controller reduces overall consumables and costs by sharing the control circuit and EMC components; 3) The power density of the air conditioning controller is improved, reducing the system volume; 4) The air conditioning controller reduces the overall weight and increases the cruising range; 5) The air conditioning controller eliminates external wire harness connections, reduces fault points, and enhances reliability.

Although the embodiments of the present application have been shown and described, it will be understood by those of ordinary skill in the art that various changes, modifications, substitutions, and variations can be made to these embodiments without departing from the principles and spirit of the present application. The scope of the present application is defined by the appended claims and their equivalents.

The technical features of the above-described embodiments can be combined arbitrarily. For the sake of concise description, not all possible combinations of the various technical features in the above embodiments have been described. However, as long as there is no contradiction in the combination of these technical features, they should be considered as being within the scope of the description in this specification.

The above-described embodiments only represent several implementation modes of the present application, and their descriptions are relatively specific and detailed, but they should not be construed as limiting the scope of the patent application. It should be noted that for those of ordinary skill in the art, several modifications and improvements can be made without departing from the concept of the present application, and these all fall within the protection scope of the present application. Therefore, the protection scope of the patent of the present application shall be subject to the appended claims.

## Claims

1. An air conditioning controller, **characterized by** comprising:
a high-voltage side control unit, comprising a high-voltage side controller configured to control operation of a water heater and a compressor to achieve temperature regulation;
a low-voltage side control unit, comprising a low-voltage side controller configured to receive an external input command and transmit the external input command to the high-voltage side controller, wherein the external input command is transmitted via a communication circuit through a digital isolation unit, and the external input command is configured to control the water heater and the compressor;
a digital isolation unit arranged between the high-voltage side control unit and the low-voltage side control unit to realize isolated communication between the high-voltage side control unit and the low-voltage side control unit; and
a circuit board, on which the high-voltage side control unit, the low-voltage side control unit and the digital isolation unit are arranged.

2. The controller according to claim 1, wherein the high-voltage side control unit further comprises a high-voltage EMC filter circuit connected to a traction battery and configured to stabilize power supply of the traction battery.

3. The controller according to claim 1, wherein the high-voltage side control unit further comprises a phase current sampling circuit configured to monitor a three-phase current of the compressor.

4. The controller according to claim 2, wherein the high-voltage side control unit further comprises a bus voltage sampling circuit configured to detect a voltage of the traction battery.

5. The controller according to claim 1, wherein the high-voltage side control unit further comprises a bus current sampling circuit configured to sample an input current of the controller.

6. The controller according to any one of claims 1-5, wherein the high-voltage side control unit further comprises a compressor U, V, W three-phase full-bridge circuit/module configured to control start/stop, a rotation speed, and a working power of the compressor.

7. The controller according to claim 1, wherein the high-voltage side control unit further comprises:
a water heater; and
a water heater power circuit configured to control start/stop and a power of the water heater.

8. The controller according to claim 7, wherein the high-voltage side control unit further comprises a water heater resistance current sampling circuit configured to collect an operating current of the water heater.

9. The controller according to any one of claims 1-5 and 7, wherein the high-voltage side control unit further comprises:
a power device case temperature sampling module configured to collect case temperatures of power devices of the compressor controller and the water heater controller; and
a board temperature sampling module configured to collect a temperature of the circuit board.

10. The controller according to any one of claims 1-5 and 7, wherein the low-voltage side control unit or the high-voltage side controller unit comprises a water temperature sampling module electrically connected to the low-voltage side control unit or the high-voltage side control unit and configured to detect a water temperature of the water heater.

11. The controller according to any one of claims 1-5 and 7, wherein the low-voltage side control unit further comprises a low-voltage EMC filter circuit connected to a low-voltage power supply battery, the low-voltage power supply battery supplies power to the low-voltage side control unit, and the low-voltage EMC filter circuit is configured to stabilize power supplied to the low-voltage side control unit.

12. The controller according to any one of claims 1-5 and 7, wherein the low-voltage side control unit further comprises a solenoid valve control module configured to control start/stop or a power of a fan.

13. The controller according to claim 12, wherein the solenoid valve control module is further configured to control start/stop or a power of a water pump.

14. An air conditioning thermal management control method, employing the controller according to any one of claims 1-13, **characterized by** comprising following steps:
receiving, by the low-voltage side controller, an external input command from a control panel, the external input commands comprising one or more of power on/off information, temperature setting information, or an air volume;
transmitting, by the low-voltage side controller, the external input command to the high-voltage side controller via a communication circuit through a digital isolation unit, wherein the digital isolation unit is arranged between the high-voltage side control unit and the low-voltage side control unit to realize isolated communication between the high-voltage side control unit and the low-voltage side control unit; and
controlling, by the high-voltage side controller, operation of a water heater and a compressor to achieve temperature regulation.

15. The control method according to claim 14, wherein the high-voltage side or the low-voltage side is further configured to obtain a water temperature of the water heater.

16. The control method according to claim 14, wherein the high-voltage side or the low-voltage side is further configured to obtain an operating current of the water heater.

17. The control method according to claim 16, wherein the high-voltage side or the low-voltage side is further configured to obtain case temperatures of power devices of the compressor controller and the water heating controller, and a temperature of the circuit board.

18. An electric vehicle air conditioning system, **characterized by** comprising the controller according to any one of claims 1-13, or performing the control method according to any one of claims 14-17.
